# EUROPÄISCHE PATENTSCHRIFT

(11) **EP 0 458 254 B1**
(45) Veröffentlichungstag und Bekanntmachung des Hinweises auf die Patenterteilung: **16.03.1994**
(21) Anmeldenummer: 91108160.2
(22) Anmeldetag: 21.05.1991
(51) Int. Cl.: A47J 45/07

(54) **Befestigungsvorrichtung zur Befestigung eines Griffelementes an einem Kochgeschirr**
Fixing device for fixing a grip to a cooking vessel
Dispositif de fixation d'une poignée à un récipient de cuisson

(30) Priorität: 22.05.1990 DE 4016399
(43) Veröffentlichungstag der Anmeldung: 27.11.1991
(73) Patentinhaber: Heinrich Baumgarten KG Spezialfabrik für Beschlagteile, D-57277 Neunkirchen (DE)
(72) Erfinder: Baumgarten, Gerd Diethard, D-5901 Wilnsdorf 1 (DE)
(74) Vertreter: Missling, Arne, Dipl.-Ing.

(56) Entgegenhaltungen:
- EP-A- 0 205 665
- DE-A- 2 340 723
- DE-A- 2 528 149
- DE-U- 7 605 364
- FR-A- 2 222 059

## Beschreibung

Die Erfindung bezieht sich auf eine Befestigungsvorrichtung zur Befestigung eines Griffelementes an einem Kochgeschirr nach dem Oberbegriff des Patentanspruches 1.

Bei der Herstellung von Kochgeschirren ist es erforderlich, das Griffelement so an dem Kochgeschirr, beispielsweise einem Kochtopf, einer Pfanne o.ä., zu befestigen, daß beim Anheben eine sichere Kraftübertragung gewährleistet ist. Weiterhin muß die Befestigung so ausgebildet sein, daß sich diese während des längeren Betriebes, insbesondere unter Wärmeeinwirkung, nicht lockert. Die Befestigungsvorrichtung muß auch gegenüber Spül- oder Reinigungsmitteln unempfindlich, insbesondere korrosionsbeständig sein. Ein weiterer Aspekt derartiger Befestigungsvorrichtungen liegt darin, daß die Kochgeschirre vielfach emailliert sind, während die Griffelemente aus einem anderen Material, beispielsweise einem nichtrostenden Stahl oder auch aus Kunststoff, bestehen. Aus den zuletzt genannten Gründen ist es nicht möglich, die Griffelemente direkt mit dem Kochgeschirr zu verbinden, da das Griffelement beispielsweise nicht mit dem Kochgeschirr zusammen emailliert werden kann.

Ein weiterer, wesentlicher Aspekt derartiger Befestigungsvorrichtungen besteht in der Wärmeübertragung zwischen dem Kochgeschirr und dem Griffelement. Es ist erforderlich, den Wärmeübergang so auszubilden, daß das Griffelement sich möglichst nicht oder nur unerheblich erwärmt, wenn das Kochgeschirr in Benutzung ist. Aus diesem Grunde scheidet beispielsweise eine flächige Verbindung aus, da diese eine sehr große Wärmeübergangsfläche aufweisen würde.

Weiterhin ist es bei Befestigungsvorrichtungen für Griffelemente erforderlich, daß diese spielfrei montiert werden können und so ausgestaltet sind, daß sie sich während des Betriebes nicht lockern.

Aus dem Stand der Technik sind Befestigungsvorrichtungen bekannt, bei welchen das Griffteil in der Art einer Führungsschiene auf ein Tragelement aufgeschoben wird. Dabei ist es zum einen nachteilig, daß diese Führungsschiene, welche an dem Kochgeschirr befestigt ist, üblicherweise weit über den Geschirrand vorsteht und somit beim automatischen Emaillieren stört, zum anderen stört die Führungsschiene während der Fertigung beim innerbetrieblichen Transport.

Es ist auch aus dem DE-Gebrauchsmuster 76 05 364 bereits eine Befestigungsvorrichtung der eingangs bezeichneten Art bekannt, bei der in dem Griffelement Ausnehmungen vorgesehen sind, die die Tragelemente überfangen und zur Arretierung der erforderlichen Befestigungselemente dienen. Die verwendeten Befestigungselemente sind dabei einteilig mit Sperrgliedern versehen, die mit den Tragelementen zusammenwirken, von denen sie lösbar sind. Infolge der Ausnehmungen sind derartige Griffelemente zumindest in der Nähe ihrer Befestigung unverhältnismäßig voluminös. Außerdem ist es manchmal erwünscht, das Griffelement unlösbar zu befestigen; dazu ist die vorbekannte Anordnung nicht geeignet.

Der Erfindung liegt die Aufgabe zugrunde, ein Befestigungselement der eingangs genannten Art zu schaffen, welches bei einfachem Aufbau und einfacher, kostengünstiger Herstellbarkeit eine sichere, dauerhafte und spielfreie Befestigung des Griffelementes ermöglicht.

Erfindungsgemäß wird die Aufgabe durch den kennzeichnenden Teil des Patentanspruches 1 gelöst.

Die erfindungsgemäße Befestigungsvorrichtung zeichnet sich durch eine Reihe erheblicher Vorteile aus. Ein besonderer Vorteil besteht darin, daß das Griffelement einerseits durch den Haltesteg starr und unelastisch an dem Tragelement gelagert wird, während andererseits die Haltefeder zum einen das Aufstecken des Griffelementes auf das Tragelement ermöglicht und zum anderen, bedingt durch die Elastizität der Haltefeder, eine spielfreie Verankerung gewährleistet. Da die Haltefeder im üblichen Rahmen elastisch ist, können geringfügige Formabweichungen des Tragelementes, welche beispielsweise durch einen Emailliervorgang hervorgerufen sind, ausgeglichen werden.

Ein weiterer, wesentlicher Vorteil der Befestigungsvorrichtung besteht weiterhin darin, daß das Befestigungselement hinsichtlich der Materialauswahl unabhängig von dem Tragelement gefertigt werden kann, so daß beispielsweise das Befestigungselement ebenso wie das Griffelement aus einem nicht rostenden Material hergestellt werden kann, während das Kochgeschirr mitsamt dem Tragelement emailliert ausgebildet sein kann.

Die Haltefeder weist bevorzugterweise einen Schenkel auf, welcher in dem zugeordneten, montierten Zustand im wesentlichen rechtwinklig zu der jeweiligen Klemmfläche ausgerichtet ist. Die elastische Haltefeder ermöglicht auch nach der Montage des Griffelementes ein spielfreies Einstellen und eine spielfreie Halterung des Befestigungselementes an dem Tragelement. Es ist besonders günstig, wenn an dem freien Ende des Schenkels der Haltefeder eine abgeschrägte Lippe vorgesehen ist, welche ein Verklemmen verhindert und einen günstigeren Reibungskoeffizienten aufweist und damit eine selbsttätige Nachstellung gewährleistet und auch eine Demontage ermöglicht.

Es ist besonders günstig, wenn das Tragelement einen verdickten Kopfbereich aufweist, an dessen dem Kochgeschirr zugewandten Seiten Klemmflächen ausgebildet sind. Der verdickte Kopfbereich verhindert zum einen ein Abrutschen des napfförmigen Befestigungselementes, die definiert ausgebildeten Klemmflächen sichern zum anderen eine vorbestimmbare, gleichbleibende Krafteinleitung und bieten die Möglichkeit, sowohl die Haltefeder als auch den Haltesteg exakt auszurichten und einzujustieren.

Bevorzugterweise ist das Tragelement symmetrisch ausgebildet, so daß hinsichtlich der Befestigung an dem Kochgeschirr keine weiteren Probleme aufgeworfen werden, da bei dem Befestigungsvorgang nicht auf eine seitenrichtige Ausrichtung geachtet werden muß.

Um möglichst günstige Kraftübertragungsverhältnisse sicherzustellen, ist vorgesehen, daß die beiden Klemmflächen zur Mittelebene des Tragelementes geneigt sind, vorteilhafterweise bilden die beiden Klemmflächen zusammen einen Winkel von annähernd 90°, so daß die durch den Haltesteg und die Haltefeder eingebrachten Kräfte im wesentlichen senkrecht auf die Klemmflächen wirken.

Die erfindungsgemäße Befestigungsvorrichtung ist universell einsetzbar und eignet sich beispielsweise dazu, einen üblichen Griff an einem Kochtopf zu lagern, wobei der Griff oder das Griffelement mittels zweier Befestigungselemente angebracht ist. Es ist jedoch auch möglich, nur ein Befestigungselement mittels nur eines Tragelementes an einem Kochgeschirr zu sichern, beispielsweise zur Lagerung eines Pfannengriffes oder eines Stielgriffes für eine Kasserolle. Weiterhin ist es erfindungsgemäß möglich, jedem Tragelement ein separates Befestigungselement zuzuordnen, die Erfindung gestattet es jedoch auch, zwei Tragelemente mit nur einem, die beiden Tragelemente übergreifenden Befestigungselement zu verankern.

Weiterhin ist es besonders günstig, daß das Befestigungselement als Tiefziehteil ausgebildet sein kann, es lassen sich somit auch optisch sehr ansprechende Formen realisieren. Dabei ist es insbesondere günstig, daß die äußere Form des Befestigungselementes frei wählbar ist und unabhängig von den technischen Anforderungen an die Verankerung mit dem Tragelement gewählt werden kann.

Das Tragelement ist in besonders günstiger Weise als Blech-Biegeteil ausgebildet und umfaßt zwei in einem Winkel zueinander angeordnete Platten, welche an ihrem freien Ende miteinander verbunden sind. Die Platten weisen jeweils die im wesentlichen T-förmige Ausgestaltung mit dem verbreiterten Kopfbereich auf. Diese Form des Tragelementes ermöglicht zum einen eine besonders einfache und kostengünstige Herstellung, weiterhin kann das Tragelement in einfachster Weise mit dem Kochgeschirr verschweißt werden, bevor dieses emailliert wird. Der Emailliervorgang wird durch das Tragelement nicht beeinträchtigt, da dieses gut durchspülbar ist und da sich in dem Tragelement keine Luftblasen o.ä. ansammeln können.

Die oben beschriebene Ausgestaltung des Tragelementes als Blech-Biegeteil schafft den zusätzlichen Vorteil, daß der Haltesteg formschlüssig in das Befestigungselement einhängbar ist, so daß eine zusätzliche Sicherheit gegen seitliche Relativbewegungen zwischen dem Griffelement und dem Kochgeschirr gegeben ist.

Das napfförmige Befestigungselement gestattet unterschiedlichste Anbringungsmöglichkeiten des jeweiligen Griffelementes, dieses kann längs oder quer, bezogen auf die Grundebene des Kochgeschirres, verschweißt werden. Ein weiterer, besonderer Vorteil der Erfindung liegt darin, daß, bedingt durch den symmetrischen Aufbau des Tragelementes das napfförmige Befestigungselement in zwei unterschiedlichen Positionen einhängbar ist, einmal so, daß die Haltefeder oben angeordnet ist und einmal so, daß die Haltefeder am unteren Bereich des Tragelementes plaziert ist. Hierdurch lassen sich unterschiedliche Krafteinleitungsverhältnisse zwischen dem Griffelement und dem Kochgeschirr berücksichtigen.

Im folgenden wird die Erfindung anhand von Ausführungsbeispielen in Verbindung mit der Zeichnung beschrieben. Dabei zeigt:
- Fig. 1: eine schematische Draufsicht, teils im Schnitt, auf ein erstes Ausführungsbeispiel einer betriebsfertig montierten erfindungsgemäßen Befestigungsvorrichtung,
- Fig. 2: eine Seitenansicht auf ein Ausführungsbeispiel des Befestigungselementes im Schnitt,
- Fig. 3: eine Unteransicht eines Teilbereiches des in Fig. 1 gezeigten Befestigungselementes,
- Fig. 4: eine Unteransicht auf das in den Fig. 1 bis 3 gezeigte Befestigungselement,
- Fig. 5: eine Seitenansicht eines Ausführungsbeispieles des erfindungsgemäßen Tragelementes,
- Fig. 6: eine weitere Ansicht auf das Tragelement, ähnlich der in Fig. 1 dargestellten Ansicht,
- Fig. 7: eine Seitenansicht eines weiteren Ausführungsbeispieles der erfindungsgemäßen Befestigungsvorrichtung,
- Fig. 8: eine Draufsicht auf ein weiteres Ausführungsbeispiel, ähnlich Fig. 1,
- Fig. 9: eine Draufsicht, ähnlich Fig. 1, auf ein weiteres Ausführungsbeispiel des Befestigungselementes und
- Fig. 10: eine Seitenansicht, welche den Montagevorgang darstellt.

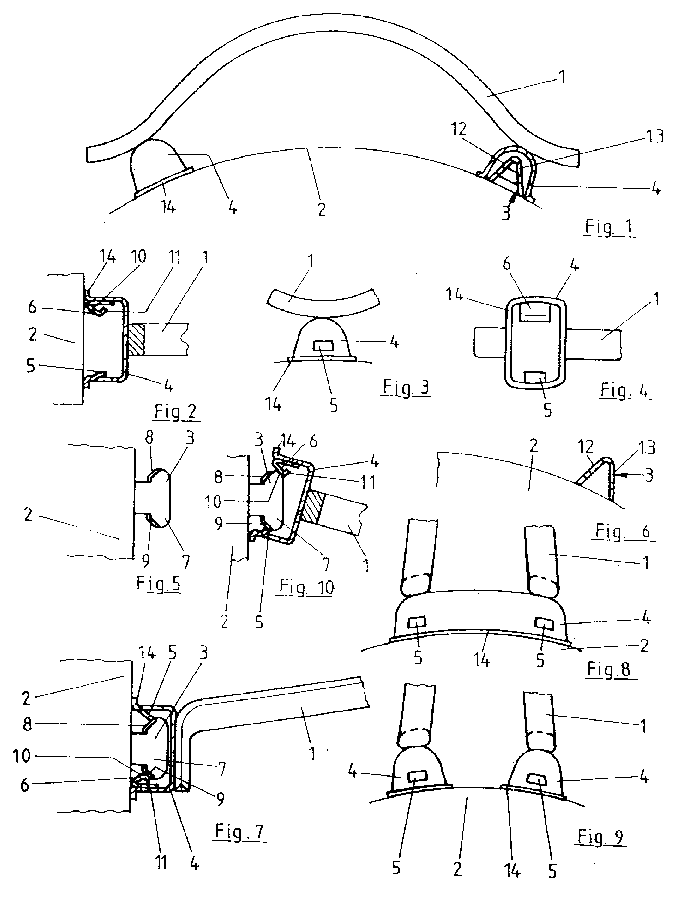

In den Fig. ist jeweils ein drahtbügelartiges Griffelement 1 gezeigt, welches aus einem beliebigen Profil gefertigt sein kann und beispielsweise aus einem nicht rostenden Material besteht. Das Griffelement 1 kann in Form eines üblichen Kochtopfgriffes ausgestaltet sein, es kann jedoch auch, wie in Fig. 7 gezeigt, einen Stielgriff für eine Pfanne oder Kasserolle bilden, oder, nicht gezeigt, als Deckelgriff ausgebildet sein.

In den Fig. 1 bis 10 ist ein Kochgeschirr 2 jeweils nur in schematischer Weise durch seine Außen-Umfangslinie angedeutet, das Kochgeschirr 2 kann beispielsweise ein Kochtopf oder eine Pfanne oder Deckel sein.

An dem Kochgeschirr 2 ist erfindungsgemäß zumindest ein Tragelement 3 angebracht, welches, wie beispielsweise aus den Fig. 5, 7 und 10 ersichtlich ist, in der Seitenansicht eine im wesentlichen T-förmige Gestalt mit einem verdickten Kopfbereich 7 aufweist. An der dem Kochgeschirr 2 zugewandten Seite sind an dem verdickten Kopfbereich 7 Klemmflächen 8 und 9 ausgebildet, welche zueinander einen im wesentlichen rechten Winkel bilden. Die Fig. 1 und 6 zeigen eine weitere Seitenansicht des Tragelementes 3, aus welcher sich ergibt, daß dieses aus zwei Platten 12 und 13 besteht, welche an ihrem Scheitelbereich miteinander verbunden sind und in einem Winkel zueinander ausgerichtet sind, so daß sich eine im wesentlichen dreieckförmige Gestalt ergibt.

An dem Griffelement ist ein im wesentlichen napfförmiges Befestigungselement 4 angeschweißt, welches mit einem bodenseitigen Rand 14 ausgestattet ist, der exakt an die Rundung des Kochgeschirres angepaßt ist, so wie dies beispielsweise in den Fig. 8 und 9 dargestellt ist. Das Befestigungselement 4 ist bevorzugterweise als Tiefziehteil ausgebildet und besteht beispielsweise ebenfalls aus einem nicht rostenden Material. An zwei einander gegenüberliegenden Seiten des Befestigungselementes sind jeweils ein Haltesteg 5 und eine Haltefeder 6 angebracht. Der Haltesteg 5 ist, wie sich aus den Darstellungen ergibt, bevorzugterweise aus der Wandung ausgestellt und erstreckt sich als starres Bauelement in den Innenraum des Befestigungselementes 4. Die Haltefeder 6 ist als zusätzliches Bauteil an der Innenwandung des Befestigungselementes 4 befestigt, beispielsweise durch Anschweissen. Die Haltefeder 6 weist einen Schenkel 10 auf, dessen freier Rand in Form einer Lippe 11 gebildet ist, um ein Überschieben des Befestigungselementes 4 über das Tragelement 3 zu erleichtern und eine selbsttätige Nachstellung der Feder im Gebrauch oder eine Demontage zu ermöglichen.

Die Befestigung des Griffelementes 1 an dem Kochgeschirr 2 wird insbesondere aus der Zusammenschau der Fig. 2, 5 und 10 ersichtlich. Die Fig. 2 zeigt das Befestigungselement 4 im nicht montierten Zustand, die Fig. 5 zeigt in der Seitenansicht das Tragelement 3. Die Befestigung erfolgt dadurch, daß zunächst der Haltesteg 5 gegen die Klemmfläche 9 angelegt bzw. zwischen die Platten 12 und 13 eingehängt wird. Nachfolgend erfolgt ein Verschwenken des Griffelementes, wodurch die Haltefeder 6 elastisch verformt wird und über den verdickten Kopfbereich 7 des Tragelementes 3 gleiten kann. Nachfolgend stützt sich die Haltefeder 6 gegen die obere Klemmfläche 8 ab, so daß das Befestigungselement 4 sicher an dem Tragelement 3 verankert ist. Die Fig. 7 zeigt einen derartigen montierten Zustand, wobei jedoch in diesem Falle die Haltefeder 6 an der Unterseite des Tragelementes 3 angeordnet ist, um die speziell bei einer Panne auftretenden Belastungsverhältnisse ausgleichen zu können.

Die Erfindung ist nicht auf die gezeigten Ausführungsbeispiele beschränkt, vielmehr ergeben sich für den Fachmann im Rahmen der Erfindung vielfältige Abwandlungs- und Modifikationsmöglichkeiten.

## Patentansprüche

1. Befestigungsvorrichtung zur Befestigung eines Griffelementes (1) an einem Kochgeschirr (2), an dem zumindest ein Tragelement (3) befestigt ist, welches einen im wesentlichen V-förmigen, mit dem Scheitel von dem Kochgeschirr (2) wegweisenden Querschnitt und einen verdickten Kopfbereich (7) aufweist, an dessen dem Kochgeschirr (2) zugewandten Seiten Klemmflächen (8,9) ausgebildet sind, dadurch gekennzeichnet, daß an dem Griffelement (1) zumindest ein napfförmiges Befestigungselement (4) angebracht ist, welches auf das Tragelement (3) aufsteckbar und an seinen gegenüberliegenden Innenwänden einerseits mit einem starren Haltesteg (5) und andererseits mit einer dem Haltesteg (5) gegenüberliegenden Haltefeder (6) versehen ist, daß die Haltefeder (6) einen Schenkel (10) aufweist, welcher im zugeordneten Zustand des Befestigungselementes (4) zu dem Tragelement (3) im wesentlichen rechtwinklig zu der jeweiligen Klemmfläche (8,9) angeordnet ist, und daß das freie Ende des Schenkels (10) mit einer abgeschrägten Lippe (11) versehen ist.

2. Vorrichtung nach Anspruch 1, dadurch gekennzeichnet, daß das Tragelement (3) symmetrisch ausgebildet ist.

3. Vorrichtung nach Anspruch 2, dadurch gekennzeichnet, daß die beiden Klemmflächen (8,9) zur Mittelebene des Tragelementes (3) geneigt sind.

4. Vorrichtung nach Anspruch 3, dadurch gekennzeichnet, daß die beiden Klemmflächen (8,9) zusammen einen Winkel von annähernd 90° einschließen.

5. Vorrichtung nach einem der Ansprüche 1 bis 4, dadurch gekennzeichnet, daß der Haltesteg (5) im zugeordneten Zustand des Befestigungselementes (4) zu dem Tragelement (3) im wesentlichen rechtwinklig zu der jeweiligen Klemmfläche (8,9) angeordnet ist.

6. Vorrichtung nach einem der Ansprüche 1 bis 5, dadurch gekennzeichnet, daß das Griffelement (1) mittels zweier Tragelemente (3) befestigt ist.

7. Vorrichtung nach Anspruch 6, dadurch gekennzeichnet, daß am Griffelement (1) zwei Befestigungselemente (4) angeordnet sind.

8. Vorrichtung nach Anspruch 6, dadurch gekennzeichnet, daß am Griffelement (1) ein beide Tragelemente (3) übergreifendes Befestigungselement (4) angeordnet ist.

9. Vorrichtung nach einem der Ansprüche 1 bis 8, dadurch gekennzeichnet, daß das Befestigungselement (4) als Tiefziehteil ausgebildet ist.

10. Vorrichtung nach einem der Ansprüche 1 bis 9, dadurch gekennzeichnet, daß das Tragelement (3) als Blech-Biegeteil ausgebildet ist und zwei in einem Winkel zueinander angeordnete Platten (12,13) umfaßt, welche an ihren freien Enden miteinander verbunden sind und die im wesentlichen T-förmige Form haben.

11. Vorrichtung nach Anspruch 10, dadurch gekennzeichnet, daß der Haltesteg (5) formschlüssig in das Befestigungselement (4) einhängbar ist.

## Claims

1. A securing device for securing a handle element (1) to a cooking vessel (2), to which cooking vessel there is secured at least one bearing element (3) which has an enlarged head region (7) and a substantially V-shaped cross-section the apex of which is directed away from the cooking vessel (2), clamping surfaces (8, 9) being formed on the sides of the head region (7) which are facing the cooking vessel (2), characterised in that at least one bowl-shaped securing element (4) is attached to the handle element (1), can be fixed to the bearing element (3) and is on its facing inside walls provided on the one hand with a rigid retaining bar (5) and on the other hand with a retaining spring (6) opposite the retaining bar (5), in that the retaining spring (6) has a leg (10) which - when the securing element (4) is associated with the bearing element (3) - is arranged substantially at right angles to the clamping surface (8, 9) in question, and in that the free end of the leg (10) is provided with an inclined lip (11).

2. A device in accordance with Claim 1, characterised in that the bearing element (3) is symmetrical.

3. A device in accordance with Claim 2, characterised in that the two clamping surfaces (8, 9) are inclined towards the centre plane of the bearing element (3).

4. A device in accordance with Claim 3, characterised in that the two clamping surfaces (8, 9) together form an angle of approximately 90°.

5. A device in accordance with any one of Claims 1 to 4, characterised in that, when the securing element (4) is associated with the bearing element (3), the retaining bar (5) is arranged substantially at right angles to the clamping surface (8, 9) in question.

6. A device in accordance with any one of Claims 1 to 5, characterised in that the handle element (1) is secured by means of two bearing elements (3).

7. A device in accordance with Claim 6, characterised in that two securing elements (4) are arranged on the handle element (1).

8. A device in accordance with Claim 6, characterised in that a securing element (4) which engages over both bearing elements (3) is arranged on the handle element (1).

9. A device in accordance with any one of Claims 1 to 8, characterised in that the securing element (4) is in the form of a deep-drawn part.

10. A device in accordance with any one of Claims 1 to 9, characterised in that the bearing element (3) is in the form of a sheet-metal bending-part and comprises two plates (12, 13) which are ananged at an angle to one another, connected to one another at their free ends and are substantially T-shaped.

11. A device in accordance with Claim 10, characterised in that the retaining bar (5) can be attached to the securing element (4) in a positive-locking manner.

## Revendications

1. Dispositif de fixation d'un organe formant poignée (1) sur un récipient de cuisson (2), sur lequel est fixé au moins un organe support (3) présentant une section essentiellement en forme de V, dont le sommet est du côté opposé au récipient de cuisson (2), et comportant une zone épaissie, formant tête, (7), des surfaces de blocage (8, 9), étant réalisées sur les côtés, tournés vers le récipient de cuisson (2) de cette zone formant tête,
caractérisé en ce que,
sur l'organe formant poignée (1), est rapporté au moins un organe de fixation (4) en forme de godet, que l'on peut implanter sur l'organe support (3) et qui est équipé, d'une part, sur ses parois intérieures qui se font face, d'une part d'une barrette de maintien (5) rigide, et, d'autre part, d'un ressort de maintien (6) placé du côté opposé à cette barrette, en ce que le ressort de maintien (6) présente une branche (10) disposée essentiellement perpendiculairement à la surface de blocage (8, 9) concernée quand l'organe de fixation (4) est adapté sur l'organe support (3), et en ce que l'extrémité libre de la branche (10) est munie d'une lèvre inclinée (11).

2. Dispositif suivant la revendication 1, caractérisé en ce que l'organe support (3) est réalisé symétrique.

3. Dispositif suivant la revendication 2, caractérisé en ce que les deux surfaces de blocage (8, 9) sont inclinées par rapport au plan médian de l'organe support (3).

4. Dispositif suivant la revendication 3, caractérisé en ce que les deux surfaces de blocage (8, 9) forment entre elles un angle d'environ 90°.

5. Dispositif suivant l'une quelconque des revendications 1 à 4, caractérisé en ce que la barrette de maintien (5) est disposée essentiellement perpendiculairement à chacune des surfaces de blocage (8, 9) concernée, quand l'organe de fixation (4) est adapté sur l'organe support (3).

6. Dispositif suivant l'une quelconque des revendications 1 à 5, caractérisé en ce que l'organe formant poignée (1) est fixé au moyen de deux organes support (3).

7. Dispositif suivant la revendication 6, caractérisé en ce que, sur l'organe formant poignée (1), sont disposés deux organes de fixation (4).

8. Dispositif suivant la revendication 6, caractérisé en ce que, sur l'organe formant poignée (1), est disposé un organe de fixation (4) recouvrant les deux organes support (3).

9. Dispositif suivant l'une quelconque des revendications 1 à 8, caractérisé en ce que l'organe de fixation (4) est une pièce réalisée par emboutissage profond.

10. Dispositif suivant l'une quelconque des revendications 1 à 9, caractérisé en ce que l'organe support (3) est réalisé sous la forme d'une pièce de tôle pliée et comporte deux panneaux (12, 13) formant un angle entre eux, et qui sont reliés l'un à l'autre à leurs extrémités libres et présentent une forme essentiellement en T.

11. Dispositif suivant la revendication 10, caractérisé en ce que la barrette de maintien (5) peut être introduite dans l'organe de fixation (4) en conjugaison de formes.
